# EUROPÄISCHE PATENTANMELDUNG

(11) **EP 2 105 242 A1**
(43) Veröffentlichungstag der Anmeldung: **30.09.2009**
(21) Anmeldenummer: 09156235.5
(22) Anmeldetag: 26.03.2009
(51) Int. Cl.: B23K 26/42, B23K 26/38

(54) **Verfahren zum Vermessen wenigstens einer Bohrung in zumindest einer ersten Oberfläche eines Bauteils**

(30) Priorität: 28.03.2008 DE 102008016026
(71) Anmelder: MTU Aero Engines GmbH, 80995 München (DE)
(72) Erfinder: Kriegmair, Josef, 85465 Langenpreising (DE)

(57) **Zusammenfassung**

Die Erfindung betrifft ein Verfahren zum Vermessen wenigstens einer Bohrung (12) in zumindest einer ersten Oberfläche (14a) eines Bauteils (10), insbesondere für Strömungsmaschinen, bei welchem zumindest die Schritte a) Bereitstellen einer Soll-Geometrie des Bauteils (10) zumindest für den Bereich der Bohrung (12) mittels eines Datenverarbeitungssystems, wobei die Soll-Geometrie zumindest eine erste Soll-Oberfläche (14a) des Bauteils (10) im Bereich der Bohrung (12) charakterisiert, b) Ermitteln einer Ist-Geometrie des Bauteils (10') zumindest für den Bereich der Bohrung (12') mittels eines Messsystems, wobei die Ist-Geometrie zumindest eine erste Ist-Oberfläche (14a') des Bauteils (10') im Bereich der Bohrung (12') charakterisiert und c) Ermitteln einer Ist-Geometrie der Bohrung (12') anhand einer Abweichung zwischen der Soll- und der Ist-Geometrie des Bauteils (10, 10') mittels des Datenverarbeitungssystems durchgeführt werden.

## Beschreibung

Die Erfindung betrifft ein Verfahren zum Vermessen wenigstens einer Bohrung in zumindest einer ersten Oberfläche eines Bauteils, insbesondere von Strömungsmaschinen.

Aus der WO 2007/028355 A1 sind ein Verfahren und eine Vorrichtung zu entnehmen, mittels welchen wenigstens eine Bohrung in einem Bauteil gefertigt werden kann. Üblicherweise werden dabei eine Vielzahl von Bohrungen, welche beispielsweise als Kühlluftbohrungen ausgeführt sein können, in geringem Abstand zueinander, mit unterschiedlichen geometrischen Ausprägungen und mit jeweils unterschiedlichen Winkeln in das Bauteil eingebracht. Wenigstens ein Teil der Bohrungen ist zudem häufig im Nahbereich von Wandgeometrien des Bauteils angeordnet.

Komplexe Soll-Geometrien des Bauteils, beispielsweise bei sogenannten Airfoils, und unvermeidbare Fertigungstoleranzen sowohl bei der Ist-Geometrie des Bauteils als auch bei der jeweiligen Bohrung verkomplizieren jedoch bislang eine prozessstabile Fertigung. Dabei werden insbesondere an Kühlluftbohrungen - insbesondere an Formbohrungen wie etwa Shaped Holes oder Turbulent Holes - hohe Anforderungen hinsichtlich Lage- und Ausprägungspräzision gestellt, um eine geforderte Kühlleistung für das Bauteil sicherzustellen. Ansonsten kann es beispielsweise aufgrund einer unzureichend ausgebildeten Trichterform der Bohrung zu einer Überhitzung des Bauteils und gegebenenfalls zu Funktionseinschränkungen der zugeordneten Strömungsmaschine kommen. Eine präzise Vermessung der Bohrung ist daher während der Fertigung, der Reparatur und der Wartung des Bauteils von großem Interesse. Das Vermessen der Bohrungen erfolgt bislang über aufwändige, langwierige und kostspielige manuelle Verfahren (Pinnen) oder über eine optische Lagebestimmung der Durchstoßöffnung der Bohrung in der Oberfläche des Bauteils. Dies erlaubt jedoch keine Aussage über die Orientierung und die konkrete Makro- bzw. Mirkogeometrie der Bohrung, so dass eine Bewertung der Güte der Bohrung und damit des Bauteils nicht möglich ist.

Aufgabe der vorliegenden Erfindung ist es daher, ein Verfahren zum Vermessen wenigstens einer Bohrung in zumindest einer ersten Oberfläche eines Bauteils zu schaffen, welches eine verbesserte und beschleunigte Aussage über die Güte der Bohrung ermöglicht.

Die Aufgabe wird erfindungsgemäß durch ein Verfahren zum Vermessen wenigstens einer Bohrung in zumindest einer ersten Oberfläche eines Bauteils gemäß Patentanspruch 1 gelöst. Vorteilhafte Ausgestaltungen des Verfahrens sind in den Unteransprüchen angegeben.

Ein erfindungsgemäßes Verfahren, mittels welchem eine verbesserte und beschleunigte Aussage über die Güte wenigstens einer Bohrung eines Bauteils ermöglicht ist, umfasst zumindest die Schritte a) Bereitstellen einer Soll-Geometrie des Bauteils zumindest für den Bereich der Bohrung mittels eines Datenverarbeitungssystems, wobei die Soll-Geometrie zumindest eine erste Soll-Oberfläche des Bauteils im Bereich der Bohrung charakterisiert, b) Ermitteln einer Ist-Geometrie des Bauteils zumindest für den Bereich der Bohrung mittels eines Messsystems, wobei die Ist-Geometrie zumindest eine erste Ist-Oberfläche des Bauteils im Bereich der Bohrung charakterisiert und c) Ermitteln einer Ist-Geometrie der Bohrung anhand einer Abweichung zwischen der Soll- und der Ist-Geometrie des Bauteils mittels des Datenverarbeitungssystems. Das erfindungsgemäße Verfahren ermöglicht aufgrund seiner einfachen Automatisierbarkeit signifikante Zeit- und Kosteneinsparungen gegenüber den bisherigen manuellen Vermessungen und erlaubt somit einen stabilen, mannlosen Betrieb. Zudem erhält man mit Hilfe des Verfahrens besonders schnell präzise und zuverlässige Aussagen über die Abweichung zwischen der Ist- und der Soll-Geometrie der Bohrung, da etwaige, beispielsweise durch Verschieben, Verdrehen, Kippen oder dergleichen verursachte Toleranzen der Ist-Geometrie des Bauteils bzw. der Bohrung optimal berücksichtigt werden. Auf diese Weise werden mit Hilfe des erfindungsgemäßen Verfahrens eine hohe Prozessstabilität und -geschwindigkeit bei der Fertigung, der Reparatur oder der Wartung des Bauteils gewährleistet. Darüber hinaus eröffnet das Verfahren neue Möglichkeiten der Prozesssteuerung, so dass beispielsweise unmittelbar nach dem Fertigen der Bohrung eine Qualitätskontrolle vorgenommen werden kann oder dass die Ist-Geometrie der Bohrung ohne zusätzliche manuelle Eingriffe als Ausgangspunkt für folgende Bohrungen, Abmessungen, Winkeleinstellungen oder dergleichen verwendet werden kann.

In einer vorteilhaften Ausgestaltung der Erfindung ist vorgesehen, dass sich die Bohrung von der ersten zu einer zweiten Oberfläche des Bauteils erstreckt. Die Bohrung ist mit anderen Worten durchgängig ausgebildet. Dabei kann vorgesehen sein, dass die Ist-Geometrie des Bauteils für jede Ist-Oberfläche getrennt bzw. nacheinander ermittelt wird.

Weitere Vorteile ergeben sich, indem die Soll-Geometrie des Bauteils zumindest die zweite Soll-Oberfläche und/oder die Ist-Geometrie des Bauteils zumindest die zweite Ist-Oberfläche des Bauteils im Bereich der Bohrung charakterisiert. Hierdurch ist eine einfache Vermessung der durchgängig ausgebildeten Bohrung in einem Verfahrensdurchgang ermöglicht. Mit Hilfe des erfindungsgemäßen Verfahrens können dabei auch etwaige Toleranzen zwischen den beiden Oberflächen, beispielsweise ein Versatz zueinander, schnell und zuverlässig berücksichtigt und vermessen werden.

In weiterer Ausgestaltung hat es sich als vorteilhaft gezeigt, wenn das Bauteil und das Messsystems vor dem Ermitteln der Ist-Geometrie in Schritt b) in Abhängigkeit der Ausgestaltung des Messsystem relativ zueinander angeordnet werden. Mit anderen Worten werden das Bauteil und das Messsystem vor dem Ermitteln der Ist-Geometrie relativ zueinander in eine für das Messsystem geeignete Lage bewegt. Die Lage hängt dabei von der jeweilige Ausgestaltung des Messsystems ab. Hierdurch wird eine möglichst hohe Präzision der anschließend ermittelten Ist-Geometrie sichergestellt.

In einer weiteren vorteilhaften Ausgestaltung der Einfindung ist vorgesehen, dass die Ist-Geometrie des Bauteils in Schritt b) mittels einer taktilen und/oder optischen und/oder durchstrahlenden und/oder durchschallenden Messeinrichtung des Messsystems ermittelt wird. Auf diese Weise können das jeweilige Material und die jeweilige Geometrie des Bauteils durch eine entsprechende Ausgestaltung des Messsystem optimal berücksichtigt werden.

Weitere Vorteile ergeben sich, indem die Soll-Geometrie des Bauteils und/oder die Ist-Geometrie des Bauteils eine Makro-Geometrie, insbesondere eine Abmessung und/oder eine Form, der Bohrung und/oder eine Mikro-Geometrie, insbesondere eine Rauheit und/oder eine Rissbildung, der Bohrung charakterisiert. Mit Hilfe der Makro-Geometrie können besonders einfach Aussagen über die sogenannte Zeichnungsforderung des Bauteils getroffen werden. Die Kenntnis der Mikro-Geometrie erlaubt alternativ oder zusätzlich Aussagen über die Qualität des Fertigungsprozesses und ermöglicht damit eine geregelte Prozesssteuerung.

In einer weiteren vorteilhaften Ausgestaltung der Einfindung ist vorgesehen, dass die Soll-Geometrie des Bauteils und/oder die Ist-Geometrie des Bauteils eine Makro-Geometrie, insbesondere eine Abmessung und/oder eine Form, der Bohrung und/oder eine Mikro-Geometrie, insbesondere eine Rauheit und/oder eine Rissbildung, der Bohrung charakterisiert.

Dabei hat es sich weiterhin als vorteilhaft gezeigt, dass das Ermitteln der Ist-Geometrie des Bauteils in Schritt b) in einem vorbestimmten Suchbereich des Bauteils durchgeführt wird. Aufgrund der im Verhältnis zum Bohrungsquerschnitt vergleichsweise großen Lagetoleranz der Bohrung wird mit Hilfe des vorbestimmten Suchbereichs sichergestellt, dass die Lage der Bohrung schnell und zuverlässig ermittelt werden kann. Wenn die Bohrung nicht innerhalb des Suchbereichs ermittelt werden kann, besitzt das Bauteil eine unzureichende Güte. In diesem Fall kann gemäß einem definierten Regelwerk weiter verfahren werden.

Weitere Vorteile ergeben sich, indem die Ist-Geometrie des Bauteils in Schritt b) anhand von Kastenmaßen und zumindest einer Form einer Fläche der Bohrung und/oder anhand Längenmaßen und Winkelmaßen ermittelt wird. Eine Ermittlung anhand von Längenmaßen und Winkelmaßen - jeweils gegebenenfalls mit Toleranzen - stellt dabei eine schnelle und einfache Möglichkeit der Vermassung dar. Alternativ oder zusätzlich kann eine Vermassung über Kastenmaße (Nominalmaße) vorgenommen werden, wobei Formen von einer Fläche für die gesamte Ist-Geometrie im Bereich der Bohrung oder für einen Teil der Ist-Geometrie im Bereich der Bohrung ermittelt werden.

In einer weiteren vorteilhaften Ausgestaltung der Einfindung ist vorgesehen, dass in Schritt b) Bauteilbasen, insbesondere Hauptebenen des Bauteils, und/oder eine Soll-Bohrungsachse der Bohrung ermittelt werden. Da die Lage der Bohrung von der Ist-Geometrie bzw. der Ausrichtung des Bauteils abhängt, kann durch Ermitteln der Bauteilbasen - beispielsweise der drei Hauptebenen bzw. der Außengeometrie des Bauteils - die Ermittlung der Ist-Geometrie des Bauteils zumindest im Bereich der Bohrung entsprechend verbessert werden. Mit Hilfe dieser Information kann die Soll-Lage der Bohrung im Bauteil ermittelt werden. Die Ermittlung der Soll-Bohrungsachse erleichtert eine spätere Bewertung über die Lage und relative Ausrichtung der Ist-Bohrungsachse gegenüber dem Bauteil.

Eine weitere Verbesserung der Ermittlung der Ist-Geometrie des Bauteils wird in weiterer Ausgestaltung dadurch erzielt, dass die Bauteilbasen anhand von Basispunkten des Bauteils und/oder anhand von Anlagepunkten des Bauteils an einer Messvorrichtung und/oder anhand einer Oberflächenerfassung des Bauteils und/oder anhand einer Bauteilerfassung ermittelt werden. Die Bauteilbasen bzw. die Hauptebenen können dabei beispielsweise durch iteratives Messen von Basispunkten (6-point nest) und/oder über Anlagepunkten des Bauteils an einer Messvorrichtung ermittelt werden. Alternativ oder zusätzlich können über eine vorzugsweise optische Oberflächenerfassung bzw. über eine teilweise oder vollständige Bauteilerfassung - beispielsweise mit Hilfe eines Computertomographieverfahrens - mit anschließender Ermittlung der Basispunkte und Basisebenen des Bauteils besonders präzise Aussagen über die Soll-Lage der Bohrung unter Berücksichtigung der Ist-Geometrie des Bauteils getroffen werden.

Dabei hat es sich in weiterer Ausgestaltung als vorteilhaft gezeigt, wenn in Schritt b) anhand der Soll-Bohrungsachse der Bohrung und der Ist-Geometrie des Bauteils ein Soll-Durchstoßpunkt der Bohrung in der Ist-Oberfläche ermittelt wird. Der Soll-Durchstoßpunkt der Bohrung kann vorteilhaft als Grundlage für die anschließende Ermittlung der Ist-Geometrie der Bohrung verwendet werden. Die Ermittlung des Soll-Durchstoßpunkts kann beispielsweise durch formales Schließen der Bohrungsöffnung in der Ist-Außengeometrie oder durch partielle Erfassung der Ist-Oberfläche des Bauteils (z.B. mit Hilfe von Teilflächen, Punkten, Linien) im Bereich der Bohrung und anschließende Berechnung des Schnittpunkts zwischen der Soll-Bohrungsachse und einem hieraus ermittelten Krümmungsradius durchgeführt werden. Alternativ oder zusätzlich kann auch ein Soll-Krümmungsradius im Bereich des Soll-Durchstoßpunkts oder eine bereits vor der Belochung des Bauteils erfasste Ist-Außengeometrie des Bauteils verwendet werden. Dabei hat es sich zur Vereinfachung der Ermittlung als vorteilhaft gezeigt, wenn eine Transformation der benötigten Parameter in ein geeignetes, bohrungsspezifische Basissystem durchgeführt wird.

Weitere Vorteile ergeben sich, indem in Schritt c) eine Ist-Bohrungsachse der Bohrung und/oder ein Ist-Durchstoßpunkt der Bohrung in der Ist-Oberfläche ermittelt wird. Dies erlaubt besonders zuverlässige Aussagen über verschiedene Ist-Parameter der Bohrung wie beispielsweise Bohrungswinkel und Bohrungslänge sowie Verdrehung oder Verschiebung der Bohrung gegenüber der Soll-Lage.

In einer weiteren vorteilhaften Ausgestaltung der Einfindung ist vorgesehen, dass die Soll-Bohrungsachse zur Ermittlung der Ist-Bohrungsachse verwendet wird und/oder die Ist-Bohrungsachse anhand der Soll-Geometrie des Bauteils ermittelt wird. Hierdurch wird insbesondere für Fälle, in denen eine hohe Messunsicherheit vorliegt, eine entsprechende Verbesserung der Ermittlung erzielt. Beispielsweise kann die Bohrungsachse so kurz oder so stark angeschnitten sein, dass sie nicht prozessstabil ermittelt werden kann.

Vorteilhaft ist weiterhin, wenn ein Bereich der Ist-Geometrie des Bauteils, der unter Berücksichtigung der Soll-Geometrie des Bauteils außerhalb eines vorbestimmten Toleranzbereichs liegt, bei der Ermittlung der Ist-Geometrie der Bohrung in Schritt c) nicht berücksichtigt wird. Dies ist insbesondere dann vorteilhaft, wenn die Bohrung vergleichsweise kurz ist oder eine Oberfläche mit einer im Vergleich zum Bohrungsquerschnitt hohen Rauheit besitzt. Indem Bereiche, die stark von der Soll-Geometrie abweichen und außerhalb von einem bestimmten Gütegrad, der u.a. von der Rautiefe und der Bohrungstoleranz abhängt, liegen bei der Ermittlung in Schritt c) nicht berücksichtigt werden, wird somit eine besonders prozessstabile Durchführung des Verfahrens ermöglicht.

In einer weiteren vorteilhaften Ausgestaltung der Einfindung ist vorgesehen, dass in Schritt c) ein Trichterparameter der Bohrung, insbesondere ein Trichterwinkel und/oder eine Trichterbreite und/oder eine Trichtertiefe und/oder eine Trichterflanke und/oder eine Trichterübergangsfläche zur Oberfläche des Bauteils und/oder ein Krümmungsradius zwischen der Trichterübergangsfläche und der Oberfläche des Bauteils, ermittelt wird. Dies ermöglicht auch bei geometrisch komplex ausgebildeten Bohrungen eine besonders präzise Aussage über deren Ist-Geometrie.

Weitere Vorteile ergeben sich, indem die in Schritt c) ermittelte Ist-Geometrie der Bohrung in einem weiteren Schritt d) bewertet und/oder dargestellt wird. Hierdurch ist eine besonders einfache und schnelle Beurteilung der Güte der Bohrung bzw. des Bauteils ermöglicht. Hierdurch können unnötige Nachbearbeitungs- und Ausschusskosten zuverlässig vermieden werden, da sichergestellt ist, dass nur Bauteile, die innerhalb der Spezifikationen liegen, ihrem weiteren Verwendungszweck zugeführt werden.

Dabei kann in weiterer Ausgestaltung vorgesehen sein, dass in Schritt d) eine Dokumentierung vorgenommen und/oder eine eine Abweichung der Ist- von der Soll-Geometrie der Bohrung charakterisierende Darstellung, insbesondere eine Farbdarstellung, erzeugt wird. Die Dokumentierung kann beispielsweise anhand eines schriftlichen und/oder elektronischen Protokolls erfolgen. Alternativ oder zusätzlich kann eine entsprechende Bildschirmdarstellung erzeugt werden, bei der vorzugsweise mit der Abweichung korrespondierende Farben verwendet werden. Hierbei können beispielsweise außerhalb der Toleranz liegende Abweichungen mit einer ersten und innerhalb der Toleranz liegende Abweichungen mit einer zweite Farbe versehen werden. Alternativ können für innerhalb der Toleranz liegende Abweichungen mit der Größe der Abweichung korrespondierende Farbverläufe verwendet werden. Die Farbvergabe der einzelnen Geometriepunkte kann dabei anhand vorbestimmter Fixwerte oder variabel anhand von jeweiligen Maximal- und Minimalabweichungen vorgenommen werden.

Eine Verbesserung der Qualitätssicherung des Bauteils ist in weiterer Ausgestaltung dadurch ermöglicht, dass das Verfahren im Fall einer als fehlerhaft bewerteten Ist-Geometrie der Bohrung abgebrochen wird. Dies ermöglicht eine unmittelbare Identifizierung und Nachbesserung der betreffenden Bohrung, wodurch das Bauteil schnell und zuverlässig mit der erforderlichen Güte hergestellt werden kann.

Eine weitere Verbesserung der Vermessungspräzision wird dadurch erzielt, dass die in Schritt c) ermittelte Ist-Geometrie der Bohrung vor der Bewertung in Schritt d) in Abhängigkeit der Soll-Geometrie der Bohrung räumlich ausgerichtet wird. Hierdurch kann insbesondere eine stark von der Soll-Geometrie abweichende Ist-Geometrie der Bohrung vorteilhaft berücksichtigt werden.

Eine besonders präzise Gütebestimmung des Bauteils ist dadurch ermöglicht, dass mehrere Bohrungen des Bauteils vermessen werden. Hierbei kann natürlich auch vorgesehen sein, dass alle Bohrungen des Bauteils vermessen werden.

In einer weiteren vorteilhaften Ausgestaltung der Einfindung ist vorgesehen, dass das Bauteil ein Turbinenblatt einer, insbesondere thermischen, Strömungsmaschine ist und/oder die Bohrung eine Kühlluftbohrung ist. Im Zusammenhang mit dem erfindungsgemäßen Verfahren kann hierdurch eine besonders hohe Qualität und Leistungsfähigkeit des Bauteils sichergestellt und ein Ausfall der zugeordneten Strömungsmaschine bzw. eine übermäßige Überhitzung des Bauteils zuverlässig ausgeschlossen werden.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig. 1: eine schematische seitliche Schnittansicht einer Soll-Geometrie eines ersten Bauteils mit mehreren Bohrungen;
- Fig. 2: eine schematische seitliche Schnittansicht einer Ist- und einer Soll-Geometrie ei- nes zweiten Bauteils mit einer Bohrung;
- Fig. 3: eine schematische seitliche Schnittansicht der Ist- und Sollgeometrie des zwei- ten Bauteils, bei welchem ein Soll-Durchstoßpunkt einer Soll-Bohrungsachse der Bohrung ermittelt wird;
- Fig. 4: eine schematische seitliche Schnittansicht der Ist- und Sollgeometrie des zwei- ten Bauteils, bei welchem ein Ist-Durchstoßpunkt einer Ist-Bohrungsachse der Bohrung ermittelt wird;
- Fig. 5: eine schematische seitliche Schnittansicht eines dritten Bauteils;
- Fig. 6: eine schematische Aufsicht und eine schematische Seitenansicht einer Bohrung eines vierten Bauteils;
- Fig. 7: eine schematische seitliche Schnittansicht und eine schematische Aufsicht eines fünften Bauteils, bei welchem die Ist-Geometrie im Bereich mehrerer Bohrun- gen anhand von Längen- und Winkelmaßen ermittelt wird;
- Fig. 8: eine schematische seitliche Schnittansicht und eine schematische Aufsicht des fünften Bauteils, bei welchem die Ist-Geometrie im Bereich mehrerer Bohrun- gen anhand von Kastenmaßen und Flächenformen ermittelt wird;
- Fig. 9: eine schematische seitliche Schnittansicht der Bohrung eines weiteren Bauteils, wobei außerhalb eines Toleranzbereichs liegende Bereiche der Ist-Geometrie des Bauteils von der Berücksichtigung ausgeschlossen werden;
- Fig. 10: eine schematische seitliche Schnittansicht der Bohrung eines weiteren Bauteils, wobei verschiedene Trichtermaße ermittelt werden; und
- Fig. 11: eine schematische Aufsicht und eine schematische seitliche Schnittansicht der Bohrung eines weiteren Bauteils, wobei Abweichungen der Ist- von der Soll- Geometrie berücksichtigt werden.

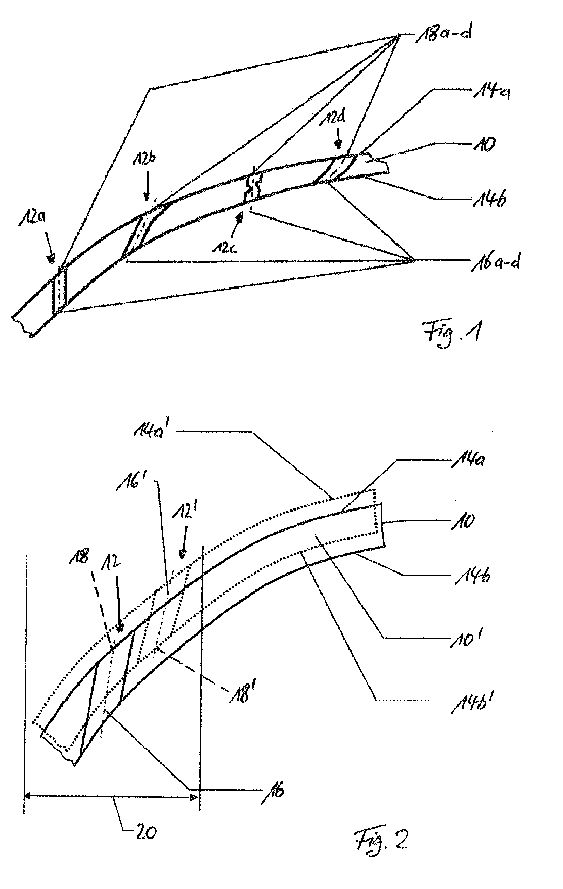

Fig. 1 zeigt ausschnittsweise eine schematische seitliche Schnittansicht einer Soll-Geometrie eines ersten Bauteils 10 einer thermischen Strömungsmaschine (z.B. Airfoil), welches mehrere als Kühlluftbohrungen ausgebildete Bohrungen 12a-d umfasst. Das Bauteil 10 besitzt dabei eine erste und eine zweite Oberfläche 14a, 14b, durch die seine Außen- bzw. Innengeometrie charakterisiert ist. Die einzelnen, vorliegend zylinder- und/oder trichterförmigen Bohrungen 12a-d erstrecken sich durchgängig von der ersten zur zweiten Oberfläche 14a, 14b und weisen jeweils unterschiedliche Soll-Geometrien mit entsprechenden Soll-Bohrungsachsen 16a-d auf, über die entsprechende Soll-Durchstoßpunkte 18a-d der Bohrungen 12a-d in den Oberflächen 14a, 14b ermittelbar sind. Die Bohrungsachsen 16 charakterisieren grundsätzlich die jeweilige Bohrungsrichtung während der Fertigung. Die Bohrungen 12a-d sind weiterhin in einem geringen räumlichen Abstand zueinander angeordnet und liegen teilweise nahe an Wandgeometrien.

Fertigungstoleranzen an der ersten und der zweiten Oberfläche 14a, 14b sowie ein Versatz von beiden zueinander erschweren in der Praxis eine prozessstabile Fertigung. Zudem verursachen unvermeidliche Fertigungstoleranzen der Oberflächen 14a, 14b ein Verschieben, Verdrehen und Kippen des tatsächlichen Bauteils 10, was Einfluss auf die Lage und Ausprägung der Bohrungen 12a-d hat. An die als Kühlluftbohrungen ausgebildeten Bohrungen 12a-d werden jedoch hohe Ansprüche hinsichtlich ihrer Ausprägung gestellt, um die spezifizierte Kühlleistung für das Bauteil 10 bereitstellen zu können. Wenn die Kühlleistung beispielsweise aufgrund einer unzureichend ausgebildeten Trichterform der jeweiligen Bohrung 12b zu gering ist, kann dies zu einer Überhitzung des Bauteils 10 und in weiterer Konsequenz zu einem Versagen der zugeordneten Strömungsmaschine führen. Dies betrifft sowohl die Neufertigung des Bauteils 10 als auch eine spätere Wartung, Überholung oder Reparatur. Daher ist eine schnelle, präzise und kostengünstige Vermessung der Bohrungen 12a-d von großem Interesse, um die Einhaltung der durch die Soll-Geometrie charakterisierten Zeichnungsforderung prozessstabil und zumindest weitgehend automatisierbar überprüfen zu können.

Das hierzu dienende, erfindungsgemäße Verfahren wird anhand der folgenden Zeichnungen näher erläutert werden. Fig. 2 zeigt hierzu eine schematische seitliche Schnittansicht einer mit durchgezogenen Linien dargestellten Soll-Geometrie eines zweiten Bauteils 10 mit einer eine Bohrungsachse 16 umfassenden Bohrung 12 und einer punktiert dargestellten Ist-Geometrie des zweiten Bauteils 10'. Im Folgenden sind die Bezugszeichen aller die Ist-Geometrie betreffenden Elemente zusätzlich mit' gekennzeichnet. Entsprechendes gilt für spezifisch die Ist-Geometrie betreffende Beschreibungsteile. Sowohl die Ist- als auch die Soll-Geometrie des Bauteils 10 liegen dabei vorzugsweise in Form von mehrdimensionalen CAD-Daten vor bzw. werden nach ihrer Ermittlung in diese Form überführt, um eine einfache Verarbeitung mittels eines Datenverarbeitungssystems zu ermöglichen. Das Vermessen der Bohrung 12' erfordert es, ausgehend von der Soll-Geometrie die Ist-Geometrie des Bauteils 10' im Bereich der Bohrung 12' mit Hilfe einer taktilen, optischen, durchstrahlenden oder durchschallenden Messeinrichtung eines Messsystems zu ermitteln. Die jeweilige Ist-Lage der Bohrung 12 hängt dabei von Bauteilbasen - beispielsweise drei Hauptebenen, einer der Oberflächen 14a', 14b' oder der Soll-Bohrungsachse 16 - des Bauteils 10' ab. Die Hauptebenen des Bauteils 10' werden entweder durch iteratives Messen von Basispunkten (z.B. 6-point nest) ermittelt. Alternativ oder zusätzlich können die Bauteilbasen anhand von Anlagepunkten des Bauteils 10' an einer Messvorrichtung oder anhand einer optischen Oberflächenerfassung des Bauteils 10' oder anhand einer Bauteilerfassung - beispielsweise mithilfe eines Computertomographen - mit anschließender Ermittlung der Basispunkte und Basisebenen ermittelt werden. Anhand dieser Information kann die Soll-Lage der Bohrung 12 ermittelt werden.

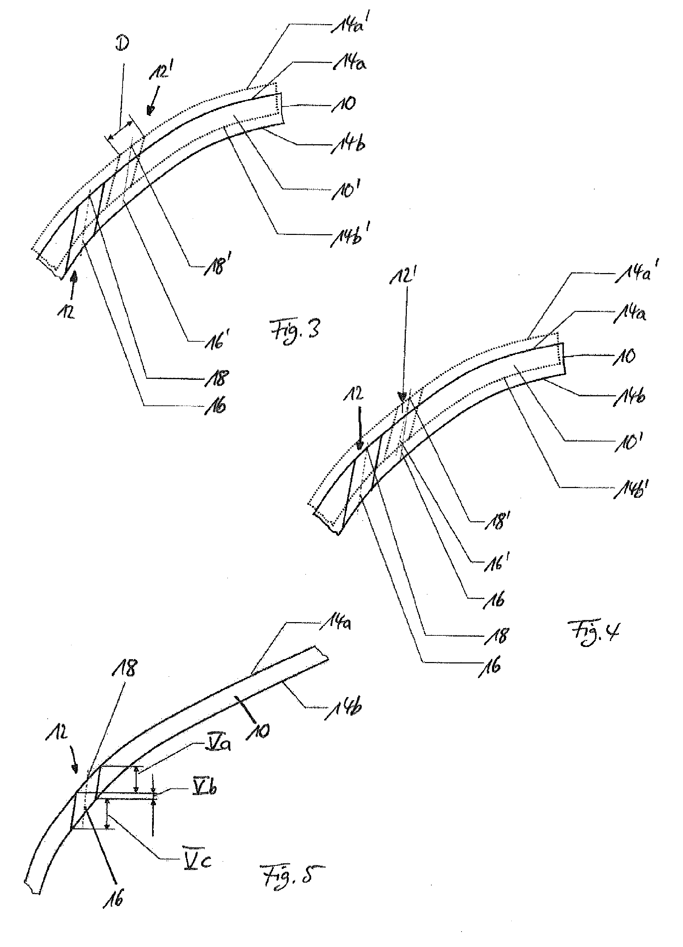

Da die Bohrung 12' üblicherweise eine vergleichsweise große Lagetoleranz im Vergleich zu ihrem Bohrungsdurchmesser bzw. -querschnitt D (s. Fig. 3) besitzt, wird die Ermittlung ihrer Ist-Geometrie zunächst zweckmäßigerweise in einem vorbestimmten Suchbereich 20 durchgeführt. Dies kann beispielsweise mit Hilfe einer Bildverarbeitung oder einer Auswertung einer zumindest im Suchbereich 20 ermittelten Ist-Oberfläche 14a' bzw. 14b' des Bauteils 10' erfolgen. Wenn die Bohrung 12' nicht im Suchbereich 20 gefunden werden kann, besitzt das Bauteil 10' nicht die erforderliche Güte und muss entsprechend nachgebessert werden. Das Vermessungsverfahren kann in diesem Fall abgebrochen werden. Alternativ kann eine schriftliche oder elektronische Dokumentierung des Fehlers vorgenommen und gegebenenfalls mit dem Vermessen einer weiteren Bohrung 12 bzw. eines weiteren Bauteils 10 fortgefahren werden.

Fig. 3 zeigt eine schematische seitliche Schnittansicht der Ist- und Sollgeometrie des zweiten Bauteils 10. Durch formales Verschieben der Soll-Bohrungsachse 16 wird deren Ist-Durchstoßpunkt 18' mit der Ist-Geometrie des Bauteils 10' ermittelt. Dies kann beispielsweise durch formales Schließen von Lücken in der Ist-Oberfläche 14a' bzw. 14b' oder durch partielle Erfassung der Ist-Oberfläche 14a' bzw. 14b' über Teilflächen, Punkte oder Linien im Bereich der Bohrung 12 erfolgen. Ebenfalls denkbar ist es, einen Schnittpunkt zwischen der Bohrungsachse 16 und einem unter Berücksichtigung der Ist- oder der Soll-Geometrie abgeleiteten Krümmungsradius der Oberfläche 14a bzw. 14b zu ermitteln oder den Ist-Durchstoßpunkt 18' anhand einer vor der Belochung des Bauteils 10' erfassten Ist-Geometrie in diesem Bereich zu bestimmen. Der ermittelte Ist-Durchstoßpunkt 18' dient im Folgenden als Basis für das weitere Vermessen der Bohrung 12'. Wird ein abweichendes Basissystem - beispielsweise ein Basissystem des Bauteils 10 - bei der Ermittlung verwendet, hat sich eine bohrungsspezifische Transformation der Geometrie-Daten in dieses Basissystem als vorteilhaft gezeigt.

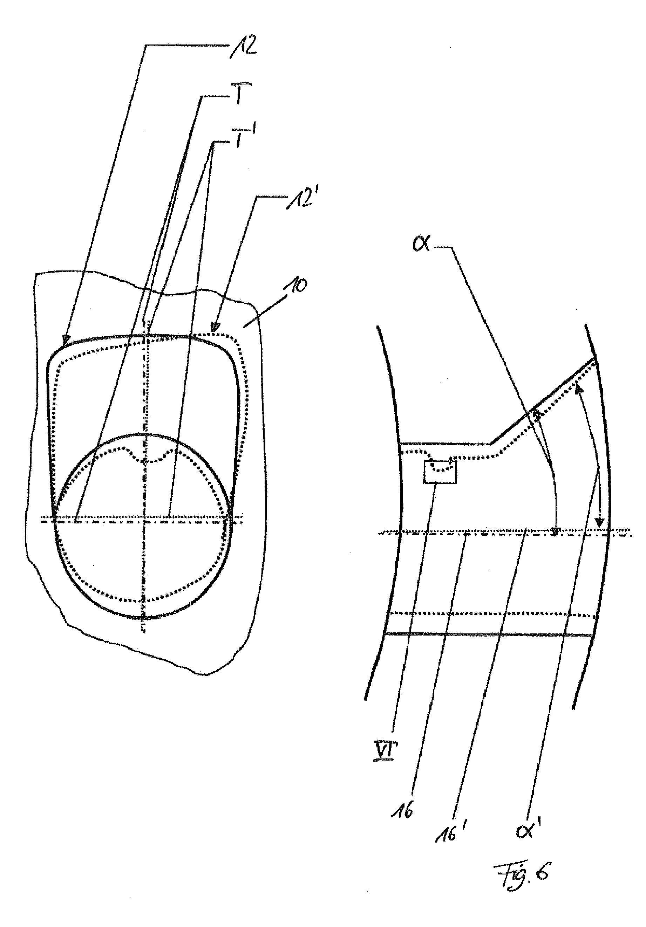

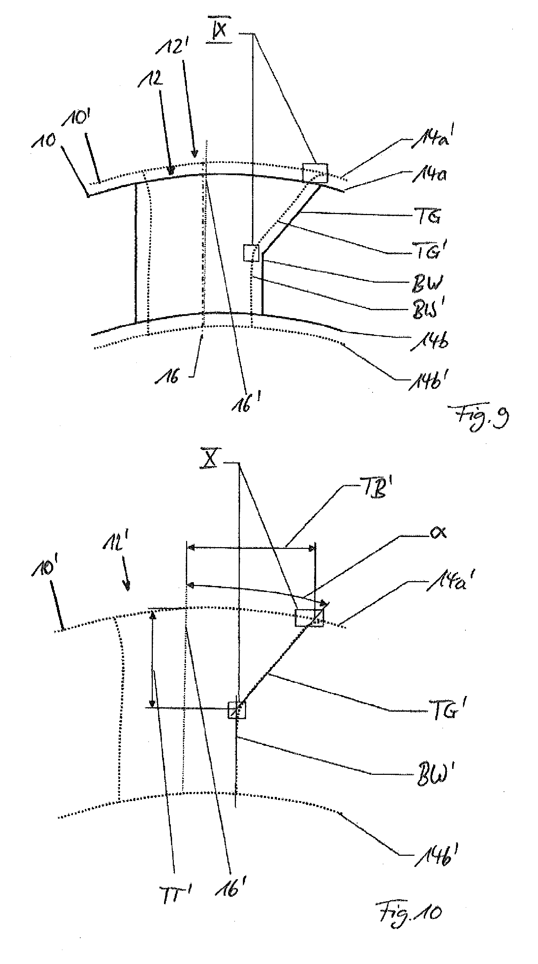

Fig. 4 zeigt eine schematische seitliche Schnittansicht des zweiten Bauteils 10, bei welchem im Unterschied zum vorherigen Ausführungsbeispiel der Ist-Durchstoßpunkt 18' anhand der Ist-Bohrungsachse 16' der Bohrung 12' ermittelt wird. Die Ist-Bohrungsachse 16' kann entweder anhand der ermittelten Ist-Geometrie des Bauteils 10' oder durch zusätzliches Messen in der Bohrung 12' ermittelt werden. Zum Vergleich ist in der Ist-Bohrung 12' zusätzlich die formal verschobene Soll-Bohrungsachse 16 gezeigt. Mittels einer taktilen, optischen, durchstrahlenden oder durchschallenden Messeinrichtung des Messsystems wird dabei die Makro- und Mikrogeometrie der Bohrung 12 beispielsweise in Form einzelner Messpunkte, Messschnitte oder durch partielles oder vollständiges Erfassen der Oberflächen 14a' bzw. 14b' ermittelt. Alternativ können hierzu bereits zuvor - beispielsweise bei der Ermittlung der Bauteilbasen - erfasste Ist-Geometrie-Daten vorteilhaft wiederverwendet werden. Unter Makro-Geometrie ist dabei beispielsweise eine Abmessung oder Form der Bohrung 12', unter Mikro-Geometrie beispielsweise eine Rautiefe oder Rissbildung der Bohrung 12' zu verstehen. Bei Bedarf werden das Bauteil 10' und das Messsystem vor dem Ermitteln der Makro- und Mikro-Geometrie in Abhängigkeit der Ausgestaltung des Messsystem so zueinander angeordnet, dass die jeweilige Messeinrichtung in eine optimale Lage gegenüber der Bohrung 12' gebracht wird. Dies verbessert die Ermittlung der Ist-Bohrungsachse 16' sowie der Ist-Geometrie der Bohrung 12'. Aus der Ist-Geometrie können bei Bedarf spezifische Bohrungsparameter wie der Bohrungsdurchmesser D, die Bohrungslänge, eine Trichterlänge, eine Trichterbreite TB (s. Fig. 10), eine Trichtertiefe TT (siehe Fig. 10), ein Trichterwinkel α (s. Fig. 6), Formabweichungen sowie richtungsabhängige oder -unabhängige Lagetoleranzen (Verdrehung, Verschiebung) ermittelt werden. Dabei kann ebenfalls vorgesehen sein, dass zusätzlich das jeweilige Basissystem oder Materialeigenschaften des Bauteils 10' berücksichtigt werden.

Fig. 5 zeigt eine schematische seitliche Schnittansicht eines dritten Bauteils 10. Aufgrund der Krümmungswinkel der Oberflächen 14a, 14b ist eine prozessstabile Ermittlung der Ist-Bohrungsachse 16' nicht möglich, da hierfür von den Messbereichen Va-c lediglich der Messbereich Vb zur Verfügung steht. In diesem Fall hat es sich als vorteilhaft gezeigt, unter Berücksichtigung der Ist-Geometrie des Bauteils die Soll-Bohrungsachse 16 als Ist-Bohrungsachse 16' zu verwenden. Bei stark angeschnittenen Bohrungen 12 können dabei grundsätzlich bei Kenntnis der Soll-Geometrie auch Soll-Flächenbereiche der Bohrung 12 verwendet werden, um Messdaten über einen größeren Längenbereich bereitstellen zu können. Alternativ kann bei Bedarf vorgesehen sein, eine Anpassung der Soll-Geometrie auf die Ist-Maße der Bohrung 12 vorzunehmen. Auch hierdurch wird eine Stabilisierung der Bohrungsachse 16 bei einer gegebenen Messunsicherheit erreicht. Dabei ist grundsätzlich zu beachten, dass die Ermittlung von Ist-Durchstoßpunkten 18' optional ist, wenn kein Element den Ist-Durchstoßpunkt 18' als Basis benötigt und er für das Vermessungsverfahren somit unerheblich ist.

Fig. 6 zeigt eine schematische Aufsicht sowie eine schematische Seitenansicht einer Bohrung 12 eines vierten Bauteils 10, wobei wiederum die Soll- und Ist-Geometrien dargestellt sind. Bohrungen 12 können allgemein eine raue oder rissige Oberfläche besitzen, wobei die Rauheit bzw. die Rissbildung - wie im Detail VI gezeigt - vergleichsweise groß im Verhältnis zum Bohrungsdurchmesser D bzw. einer Trichterhauptachse T sein kann. Beides führt insbesondere bei kurzen Bohrungsachsen 16 zu starken Richtungsänderungen, wodurch es zu entsprechenden Verschiebungen des Ist-Durchstoßpunktes 18 kommt. Dies wirkt sich naturgemäß auf alle Elemente aus, welche die Bohrungsachse 16 oder den Durchstoßpunkt 18 als Basis haben. Zu den Elementen zählen beispielsweise bei zumindest abschnittsweise trichterförmig ausgebildeten Bohrungen 12 die Trichterwinkel α der Trichterhauptachsen T, die Trichtertiefen TT, die Trichterbreiten TB, Drehungen und Kippungen des Trichters oder Basen für Folgebohrungen. Vorteilhaft für prozessstabile Aussagen ist es daher, Bereiche, die stark von einer Soll-Form abweichen und damit außerhalb eines - unter anderem von der Rautiefe und der Bohrungstoleranz abhängigen - Gütegrads liegen, zumindest bei der Ermittlung der Ist-Bohrungsachse 16' nicht zu berücksichtigen.

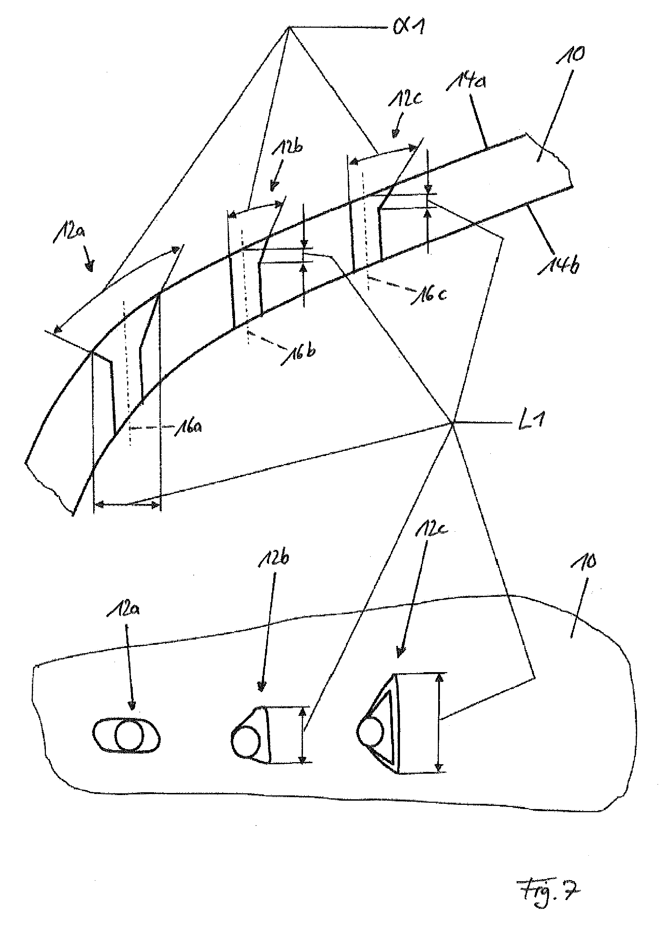

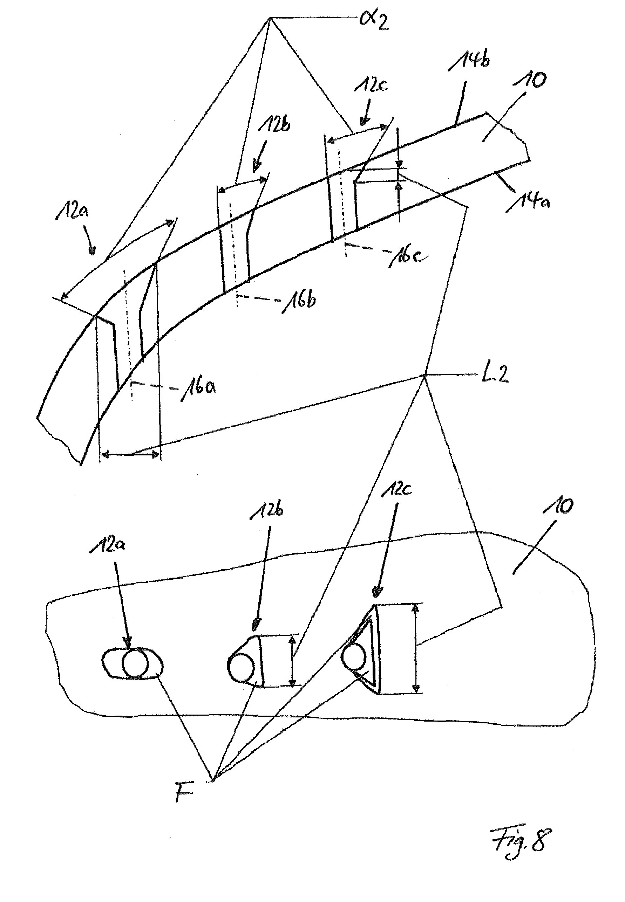

Das zum Vermessen verwendete Maß- bzw. Messsystem sowie der jeweilige Messaufbau besitzen einen entscheidenden Einfluss auf die Güte der Vermessung. Fig. 7 zeigt eine schematische seitliche Schnittansicht sowie eine schematische Aufsicht eines fünften Bauteils 10, bei welchem die Ist-Geometrie im Bereich mehrerer Bohrungen 12a-c beispielhaft anhand von Längenmaßen L1 und Winkelmaßen α1 mit jeweiligen Toleranzen ermittelt wird. Eine alternative Variante ist eine Vermassung über Kastenmaße (Nominalmaße) und Flächenformen zur Ermittlung eines teilweisen oder vollständigen Ist-Geometrie der trichterförmigen Bohrungen 12. Fig. 8 zeigt hierzu eine schematische seitliche Schnittansicht und eine schematische Aufsicht des fünften Bauteils 10, bei welchem die Ist-Geometrie im Bereich der Bohrungen 12a-c anhand von Kastenlängen L2, Kastenwinkeln α2 und zusätzlichen Flächenformen F ermittelt wird.

Eine Vermessung über Kastenmaße L2, α2 und Flächenformen F bietet dabei verschiedene Vorteile, da die Bestimmung von Winkeln, die bei kurzen Schenkellängen oder bei Verdrehung oder Verkippung der Bohrungen 12a-c nur schwer mit der erforderlichen Genauigkeit gemessen werden können, entfällt. Für die Geometrie-Messdaten der Flächenformen F wird anhand der Soll-Geometrie des Bauteils 10 verglichen, ob die Flächen innerhalb des Toleranzbereichs liegen. Basis für die Bewertung ist beispielsweise die jeweilige Ist- oder Soll-Bohrungsachse 16a-c, da sie die Lage der trichterförmigen Bohrungen 12a-c definiert. Die Übergangsbereiche von den Bohrungen 12a-c zur jeweiligen Oberfläche 14a bzw. 14b sowie die Übergangsbereiche von unterschiedlichen Wandbereichen der Bohrungen 12a-c werden bei der Auswertung beispielsweise als Ausrundungen oder durch Ausnehmen der Übergangsbereiche von der Ermittlung berücksichtigt. Die Größe der Ist-Bohrungen 12a-c hat dabei Einfluss auf den jeweiligen Übergangsbereich und wird bei Bedarf bei der Ermittlung entsprechend berücksichtigt. Fig. 9 zeigt zur Verdeutlichung hierzu eine schematische seitliche Schnittansicht die Bohrung 12 eines weiteren Bauteils 10, wobei mit IX gekennzeichneten Bereiche der Ist-Geometrie des Bauteils 10', die außerhalb einer bestimmten Toleranz liegen, von der Berücksichtigung ausgeschlossen werden. TG bzw. TG' bezeichnet dabei die Soll- bzw. die Ist-Geometrie eines trichterförmigen Bereichs der Bohrung 12, wohingegen BW bzw. BW' einen zylindrischen Bereich der Bohrung 12 bezeichnen. Die hierdurch ermittelte Ist-Geometrie der Bohrung 12' kann anschließend über entsprechende Protokolle dokumentiert und/oder vorzugsweise über eine Farbdarstellung auf einem Bildschirm dargestellt werden, wobei die Farbzuordnung besonders bevorzugt mit einer Abweichung der Ist- von der Soll-Geometrie der Bohrung korrespondiert, um eine schnelle Aussage über die Güte des Bauteils 10 zu ermöglichen.

Wenn die Ausrichtung der Ist-Geometrie der Bohrung 12 zu stark von der in der Soll-Geometrie definierten Ausrichtung abweicht - beispielsweise aufgrund einer Verdrehung der Bohrung 12 incl. Trichter, um die Bohrungsachse 16 oder eine Kippung um eine Trichterhauptachse T - wird diese Abweichung durch entsprechende Verfahrensschritte bei der Ermittlung von Ist-Trichterwinkeln α' berücksichtigt. Die Verfahrensschritte können dabei beispielsweise eine dreidimensionale Einpassung in die gegebenenfalls mit Toleranzbereichen versehene Soll-Geometrie, eine Ausrichtung über definierte Punkte oder Schnitte von Bauteilflächen, eine selbstzentrierende Messung, eine Ausrichtung der in eine normale Ebene zur Ist-Bohrungsachse 16' projizierten Ist-Form (Ist-Footprint) eines trichterförmigen Bereichs der Bohrung 12 oder dergleichen umfassen. Fig. 10 zeigt hierzu eine schematische seitliche Schnittansicht einer Ist-Geometrie eines weiteren Bauteils 10', wobei verschiedene Trichtermaße der Bohrung 12' ermittelt werden. Die mit X gekennzeichneten Bereiche der Ist-Geometrie des Bauteils 10' erfüllen auch in diesem Beispiel das vorbestimmte Toleranzkriterium nicht und werden daher von der Berücksichtigung ausgeschlossen. Dies betrifft insbesondere die Übergangsbereiche zwischen dem zylinderförmigen und dem trichterförmigen Bereich BW' bzw. TG' der Bohrung 12' sowie den Übergang von der Bohrung 12' zur Oberfläche 14a'. Das Ausschließen der Bereiche X verhindert dabei zuverlässig eine Verzerrung und Verfälschung verschiedener Parameterwerte der Bohrung 12'. Wenn die Abweichung zwischen Ist- und Soll-Geometrie nur geringen Einfluss hat, kann alternativ eine Ermittlung des Trichterwinkels α ohne weitere Ausrichtungsschritte der Ist-Geometrie der Bohrung 12' vorgesehen sein. Sobald die Ist-Lage des trichterförmigen Bereichs der Bohrung 12' bekannt ist, können der oder die Trichterwinkel α zwischen den betreffenden Ebenen gemessen bzw. aus den vorhandenen Geometrie-Daten ermittelt werden.

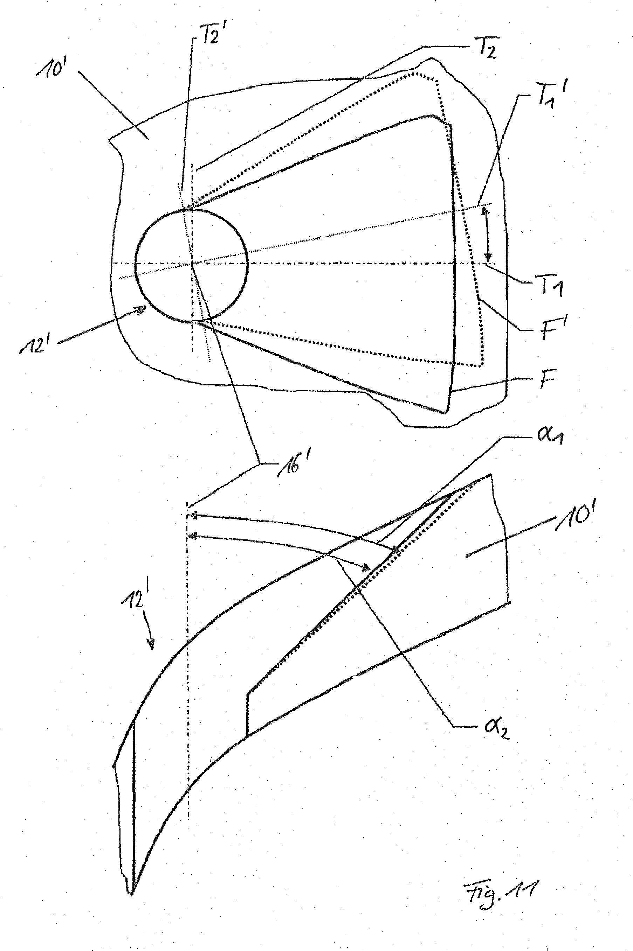

Wenn signifikante Einlaufbereiche vorhanden sind, werden die Schnittpunkte zwischen den trichterförmigen Bereichen TG' und der Oberfläche 14a' über geeignete Schnittroutinen - beispielsweise über das formale Schließen der Lücke in der Oberfläche 14a', anhand einer partiellen Ermittlung der Oberfläche 14a' im trichterförmigen Bereich TG' der Bohrung 12' mit anschließender Berechnung des Schnittpunkts zwischen der Trichterflanke und einem hieraus ermittelten Krümmungsradius oder anhand der partiell ermittelten Oberfläche 14a' mit einem definierten Krümmungsradius oder anhand des Soll-Krümmungsradius' am Schnittpunkt oder anhand der vorab ermittelten Oberfläche 14a' vor der Belochung - ermittelt. Die konkrete Reihenfolge der einzelnen Schritte hängt auch bezüglich dieses Aspekts des Verfahrens grundsätzlich von der jeweils angewandten Messtechnologie ab. Fig. 11 zeigt zur weiteren Verdeutlichung eine schematische Aufsicht sowie eine schematische seitliche Schnittansicht der Bohrung 12' eines weiteren Bauteils 10'. Die unterschiedlichen Berechnungsroutinen können in angepasster Form bei der zuvor beschriebenen Ermittlung von Ist-Durchstoßpunkten 18' verwendet werden. Wenn keine signifikanten Einlaufbereiche vorhanden sind, können die Schnittpunkte zwischen den Trichterflanken TG' und der jeweiligen Ist-Oberfläche 14a' bzw. 14b' unmittelbar aus der ermittelten Ist-Geometrie der Bohrung 12' bestimmt werden. Die Vermessungsergebnisse können dann über eine entsprechende Bildschirmanzeige, ein Protokoll, eine Farbdarstellung oder einer beliebigen Kombination von diesen dargestellt bzw. bewertet werden.

## Patentansprüche

1. Verfahren zum Vermessen wenigstens einer Bohrung (12) in zumindest einer ersten Oberfläche (14a) eines Bauteils (10), insbesondere für Strömungsmaschinen, mit den Schritten:
a) Bereitstellen einer Soll-Geometrie des Bauteils (10) zumindest für den Bereich der Bohrung (12) mittels eines Datenverarbeitungssystems, wobei die Soll-Geometrie zumindest eine erste Soll-Oberfläche (14a) des Bauteils (10) im Bereich der Bohrung (12) charakterisiert;
b) Ermitteln einer Ist-Geometrie des Bauteils (10') zumindest für den Bereich der Bohrung (12') mittels eines Messsystems, wobei die Ist-Geometrie zumindest eine erste Ist-Oberfläche (14a') des Bauteils (10') im Bereich der Bohrung (12') charakterisiert; und
c) Ermitteln einer Ist-Geometrie der Bohrung (12') anhand einer Abweichung zwischen der Soll- und der Ist-Geometrie des Bauteils (10, 10') mittels des Datenverarbeitungssystems.

2. Verfahren nach Anspruch 1, **dadurch gekennzeichnet, dass** sich die Bohrung (12) von der ersten zu einer zweiten Oberfläche (14a, 14b) des Bauteils (10) erstreckt.

3. Verfahren nach Anspruch 2, **dadurch gekennzeichnet, dass** die Soll-Geometrie des Bauteils (10) zumindest die zweite Soll-Oberfläche (14b) und/oder die Ist-Geometrie des Bauteils (10') zumindest die zweite Ist-Oberfläche (14b') des Bauteils (10') im Bereich der Bohrung (12') charakterisiert.

4. Verfahren nach einem der Ansprüche 1 bis 3, **dadurch gekennzeichnet, dass** das Bauteil (10) und das Messsystems vor dem Ermitteln der Ist-Geometrie in Schritt b) in Abhängigkeit der Ausgestaltung des Messsystem relativ zueinander angeordnet werden.

5. Verfahren nach einem der Ansprüche 1 bis 4, **dadurch gekennzeichnet, dass** die Ist-Geometrie des Bauteils (10') in Schritt b) mittels einer taktilen und/oder optischen und/oder durchstrahlenden und/oder durchschallenden Messeinrichtung des Messsystems ermittelt wird.

6. Verfahren nach einem der Ansprüche 1 bis 5, **dadurch gekennzeichnet, dass** die Soll-Geometrie des Bauteils (10) und/oder die Ist-Geometrie des Bauteils (10') eine Makro-Geometrie, insbesondere eine Abmessung und/oder eine Form, der Bohrung (12, 12') und/oder eine Mikro-Geometrie, insbesondere eine Rauheit und/oder eine Rissbildung, der Bohrung (12, 12') charakterisiert.

7. Verfahren nach einem der Ansprüche 1 bis 6, **dadurch gekennzeichnet, dass** das Ermitteln der Ist-Geometrie des Bauteils (10') in Schritt b) in einem vorbestimmten Suchbereich (20) des Bauteils (10') durchgeführt wird.

8. Verfahren nach einem der Ansprüche 1 bis 7, **dadurch gekennzeichnet, dass** die Ist-Geometrie des Bauteils (10') in Schritt b) anhand von Kastenmaßen (L2, 2) und einer Form (F) zumindest einer Fläche der Bohrung (12) und/oder anhand von Längenmaßen (L1) und Winkelmaßen (α1) ermittelt wird.

9. Verfahren nach einem der Ansprüche 1 bis 8, **dadurch gekennzeichnet, dass** in Schritt b) Bauteilbasen, insbesondere Hauptebenen des Bauteils (10), und/oder eine Soll-Bohrungsachse (16) der Bohrung (12) ermittelt werden.

10. Verfahren nach Anspruch 9, **dadurch gekennzeichnet, dass** die Bauteilbasen anhand von Basispunkten des Bauteils (10) und/oder anhand von Anlagepunkten des Bauteils (10) an einer Messvorrichtung und/oder anhand einer Oberflächenerfassung des Bauteils (10) und/oder anhand einer Bauteilerfassung ermittelt werden.

11. Verfahren nach Anspruch 9 oder 10, **dadurch gekennzeichnet, dass** in Schritt b) anhand der Soll-Bohrungsachse (16) der Bohrung (12) und der Ist-Geometrie des Bauteils (10') ein Soll-Durchstoßpunkt (18) der Bohrung (12) in der Ist-Oberfläche (14') ermittelt wird.

12. Verfahren nach einem der Ansprüche 1 bis 11, **dadurch gekennzeichnet, dass** in Schritt c) eine Ist-Bohrungsachse (16') der Bohrung (12') und/oder ein Ist-Durchstoßpunkt (18') der Bohrung (12') in der Ist-Oberfläche (14') ermittelt wird.

13. Verfahren nach Anspruch 9 und 12, **dadurch gekennzeichnet, dass** die Soll-Bohrungsachse (16) zur Ermittlung der Ist-Bohrungsachse (16') verwendet wird und/oder die Ist-Bohrungsachse (16') anhand der Soll-Geometrie des Bauteils (10) ermittelt wird.

14. Verfahren nach einem der Ansprüche 1 bis 13, **dadurch gekennzeichnet, dass** ein Bereich der Ist-Geometrie des Bauteils (10'), der unter Berücksichtigung der Soll-Geometrie des Bauteils (10) außerhalb eines vorbestimmten Toleranzbereichs liegt, bei der Ermittlung der Ist-Geometrie der Bohrung (12') in Schritt c) nicht berücksichtigt wird.

15. Verfahren nach einem der Ansprüche 1 bis 14, **dadurch gekennzeichnet, dass** in Schritt c) ein Trichterparameter der Bohrung (12'), insbesondere ein Trichterwinkel (α) und/oder eine Trichterbreite (TB) und/oder eine Trichtertiefe (TT) und/oder eine Trichterflanke und/oder eine Trichterübergangsfläche zur Oberfläche (14) des Bauteils (10) und/oder ein Krümmungsradius zwischen der Trichterübergangsfläche und der Oberfläche (14) des Bauteils (10), ermittelt wird.
